# FASCICULE DE BREVET EUROPEEN

(11) **EP 4 047 795 B1**
(45) Date de publication et mention de la délivrance du brevet: **26.08.2026**
(21) Numéro de dépôt: 22157416.3
(22) Date de dépôt: 18.02.2022
(51) Int. Cl.: H02K 9/06, H02K 9/10, H02K 1/20, H02K 9/18

(54) **MOTEUR ÉLECTRIQUE COMPRENANT UN BÂTI DÉFINISSANT UN VOLUME INTÉRIEUR CLOS ET UN ÉCHANGEUR EXTÉRIEUR AU BÂTI**
ELEKTROMOTOR MIT EINEM TRAGRAHMEN, DER EINEN GESCHLOSSENEN INNENRAUM DEFINIERT, UND MIT EINEM WÄRMETAUSCHER AUSSERHALB DIESES RAHMENS
ELECTRIC MOTOR COMPRISING A FRAME DEFINING AN ENCLOSED INTERIOR VOLUME AND AN EXCHANGER EXTERNAL TO THE FRAME

(30) Priorité: 19.02.2021 FR 2101630
(43) Date de publication de la demande: 24.08.2022
(73) Titulaire: ALSTOM Holdings, 93400 Saint-Ouen-sur-Seine (FR)
(72) Inventeur: BOUALEM, Benali, 25660 SAONE (FR)
(74) Mandataire: Plasseraud IP

(56) Documents cités:
- EP-A1- 3 098 949
- EP-A1- 3 244 515
- FR-A- 446 921
- US-A1- 2004 150 270

## Description

La présente invention concerne un moteur électrique.

Le document EP 3 098 949 A1 de la Demanderesse décrit un moteur électrique avec un circuit de refroidissement primaire pour le refroidissement d'un stator et un circuit de refroidissement secondaire pour le refroidissement d'un rotor.

Le document US 2004/0150270 A1 décrit un moteur entièrement fermé avec des ventilateurs extérieurs.

Du document EP 3 244 515 A1 de la Demanderesse, on connaît un moteur comprenant un dispositif de refroidissement extérieur à un bâti du moteur. Le dispositif de refroidissement comprend une entrée, une sortie et une conduite adaptée pour relier l'entrée et la sortie. L'entrée et la sortie sont en communication fluidique avec un volume intérieur défini par le bâti. Un fluide interne est ainsi destiné à circuler dans le volume intérieur et en particulier dans le dispositif de refroidissement.

Cependant, le refroidissement d'un tel moteur peut encore être amélioré. En particulier, la quantité d'énergie thermique transférée à partir du moteur vers l'extérieur du moteur peut encore être augmentée.

Du document EP 3 484 026 A1 de la Demanderesse, on connaît un moteur comprenant un dispositif de ventilation pour forcer la circulation d'un fluide externe de refroidissement à travers d'une conduite d'un échangeur extérieur à un bâti du moteur. Le dispositif de ventilation est en particulier disposé à l'extérieur du bâti.

Cependant, l'encombrement d'un tel moteur peut encore être réduit, tout en présentant un refroidissement efficace du moteur.

Un but de la présente invention est ainsi d'obtenir un moteur présentant une plus grande efficacité de refroidissement, tout en étant particulièrement compact.

A cet effet, l'invention a pour objet un moteur selon la revendication 1.

Ainsi, le moteur selon l'invention est particulièrement compact et présente une plus grande efficacité de refroidissement, notamment grâce au dispositif de ventilation primaire fixé à l'arbre de rotation. En effet, le moteur permet d'augmenter l'échange thermique entre le fluide externe d'une part et le fluide interne et le stator d'autre part, par la distribution du fluide externe entre un premier flux forcé à travers la ou chaque conduite de refroidissement de stator et un deuxième flux forcé à travers la ou chaque conduite primaire.

Aussi, le refroidissement du moteur est particulièrement efficace, car le flux du fluide externe est peu perturbé lors de la séparation par le dispositif de séparation, notamment grâce à l'agencement de la plaque de séparation s'étendant sensiblement parallèlement à une direction de circulation du fluide externe de refroidissement en amont du dispositif de séparation. De plus, le moteur comprenant en outre au moins une conduite d'amenée reliant le dispositif de séparation et la ou chaque conduite primaire de l'échangeur, la conduite d'amenée comprenant une boucle formant une déviation de ladite direction de circulation du fluide externe de refroidissement strictement supérieure à 90 degrés. Et la conduite d'amenée présentant : - une première zone s'étendant selon une direction formant un angle positif en sens horaire par rapport à ladite direction de circulation du fluide externe, - une deuxième zone s'étendant selon une direction sensiblement parallèle à ladite direction de circulation du fluide externe et - une troisième zone, débouchant dans la ou chaque conduite primaire, et s'étendant selon une direction formant un angle négatif en sens horaire par rapport à ladite direction de circulation du fluide externe.

Le moteur électrique selon l'invention peut en outre comprendre l'une ou plusieurs des caractéristiques suivantes selon les revendications 2 à 9.

L'invention sera mieux comprise à la lecture de la description qui va suivre, donnée uniquement à titre d'exemple et faite en se référant aux dessins annexés sur lesquels :
- la figure 1 est une représentation en section longitudinale, selon un premier plan, d'une partie d'un moteur électrique selon la mode de réalisation, sans détail de dispositif de séparation ;
- la figure 2 est une représentation en section selon un deuxième plan du moteur de la figure 1, le deuxième plan étant incliné par rapport au premier plan ;
- la figure 3 est une coupe selon un troisième plan A-A perpendiculaire au premier plan du moteur des figures 1 et 2 dans une première variante ;
- la figure 4 est une coupe correspondant au troisième plan A-A du moteur des figures 1 et 2 dans une deuxième variante ;
- la figure 5 est une coupe selon un quatrième plan B-B du moteur des figures 1 et 2 ;
- la figure 6 est une représentation en section longitudinale, selon le premier plan, du moteur des figures 1 et 2 représentant en particulier de détail du dispositif de séparation et la forme de la conduite d'amenée du moteur ;
- figure 7 est une coupe identique à celle de la figure 1 une variante non revendiquée
- la figure 8 est une coupe correspondant au troisième plan A-A du moteur de la figure 7 ;
- la figure 9 est une coupe selon un cinquième plan C-C parallèle au troisième plan A-A du moteur des figures 7 et 8 ;
- la figure 10 est une coupe correspondant au quatrième plan B-B du moteur des figures 7 à 9 ;
- la figure 11 est une coupe identique à celle de la figure 1 une autre variante non revendiquée
- la figure 12 est une coupe correspondant au quatrième plan B-B du moteur de la figure 11.

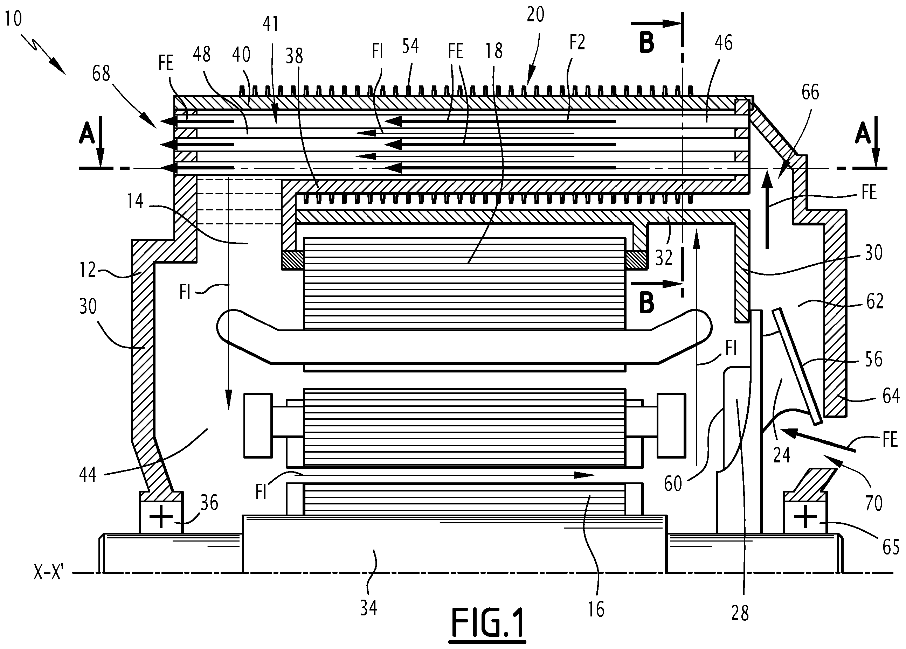

On a représenté sur les figures 1 à 6 une partie d'un moteur 10 électrique selon la mode de réalisation de l'invention. Le moteur 10 est par exemple un moteur asynchrone ou un moteur synchrone à aimants permanents. Le moteur 10 est par exemple destiné à être installé dans un train (non représenté). Par exemple, le moteur 10 est un moteur de traction du train.

En particulier, les figures 1, 2 et 6 sont des représentations schématiques partielles du moteur 10. Le moteur 10 comprend une partie, non représentée, qui est symétrique de la partie représentée par rapport à un axe de rotation X-X'.

Le moteur 10 comprend un bâti 12, ou carter, définissant un volume intérieur clos 14, ainsi qu'un rotor 16 et un stator 18 logés dans le volume intérieur clos 14.

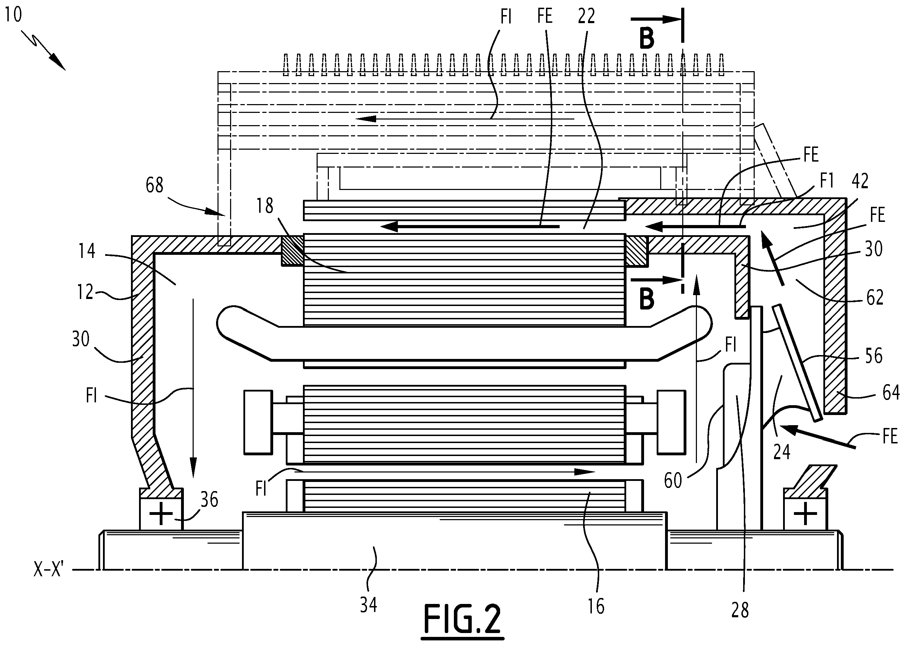

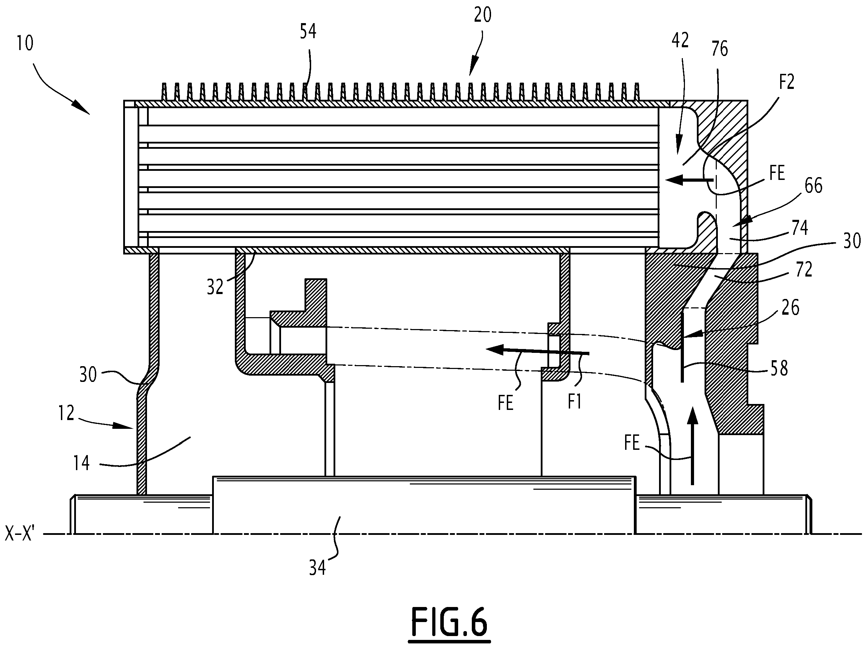

Le moteur 10 comprend, en outre, au moins un échangeur 20 extérieur au bâti 12, une conduite de refroidissement de stator 22 traversant le stator 18 (visible en particulier sur la figure 2), un dispositif de ventilation primaire 24 et un dispositif de séparation 26 (visible en particulier sur la figure 6). Le moteur 10 comprend, en outre, par exemple un dispositif de ventilation secondaire 28.

Le bâti 12 comprend par exemple deux flasques latéraux 30 et parallèles l'un par rapport à l'autre, et une paroi externe 32 agencée perpendiculairement aux flaques 30 et connectant les deux flaques 30. Les flaques 30 et la paroi externe 32 définissent ainsi le volume intérieur clos 14.

Par « volume intérieur clos », il est entendu un espace dans lequel uniquement un fluide interne FI de refroidissement est destiné à circuler, en l'absence de la circulation d'un fluide externe FE de refroidissement. En particulier, la conduite de refroidissement de stator 22 traversant le stator 18 ne fait pas partie du volume intérieur clos 14.

En particulier, le volume intérieur clos 14 est séparé fluidiquement de l'extérieur du moteur 10.

Par « fluide interne de refroidissement », il est entendu un fluide, tel que de l'air ou de l'eau, destiné à circuler uniquement à l'intérieur du moteur 10, notamment en l'absence de communication fluidique avec l'extérieur du moteur 10.

Par « fluide externe de refroidissement », il est entendu un fluide, notamment de l'air, susceptible de provenir de l'extérieur du moteur 10 et d'être refoulé après passage par le moteur 10 dans l'extérieur du moteur 10.

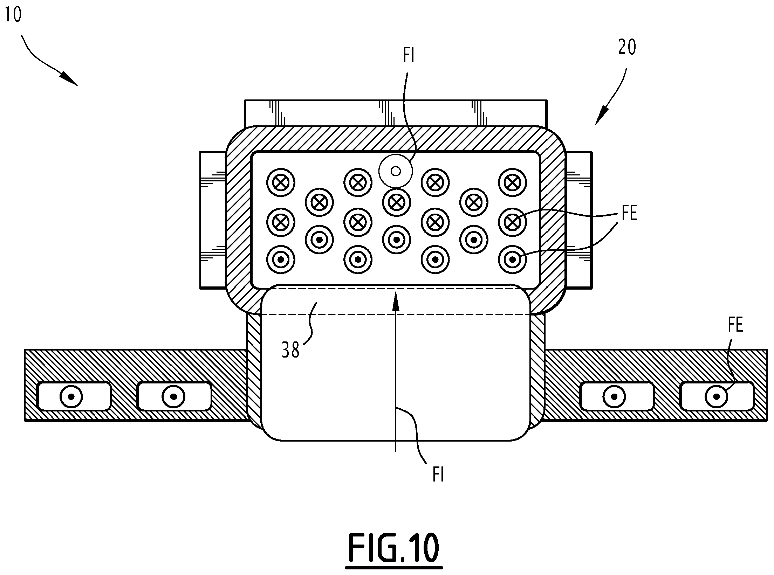

Sur les figures 1 à 12, on a représenté par des flèches épaisses le parcours du fluide externe FE et par des flèches fines le parcours du fluide interne FI.

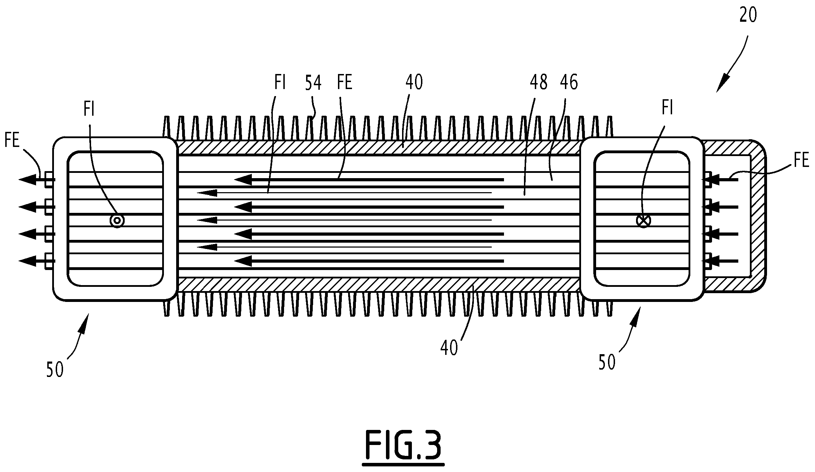

Dans les figures 3 à 5, 8 à 10 et 12, la circulation du fluide interne FI ou externe FE de refroidissement est représentée par un cercle comprenant un point au milieu lorsque la direction de circulation est perpendiculaire au plan de la figure, et faisant saillie de ce plan. La circulation du fluide interne ou externe de refroidissement est représentée par un cercle comprenant une croix au milieu lorsque la direction de circulation est perpendiculaire au plan de la figure, et selon un sens opposé à celui de la direction faisant saillie de ce plan.

Le rotor 16 et le stator 18 forment un circuit magnétique. Le stator 18 comporte par exemple un empilement de tôles magnétiques pour le guidage du flux magnétique et forme ainsi une partie du circuit magnétique du moteur 10.

Le rotor 16 est monté solidaire en rotation sur un arbre de rotation 34 du moteur 10 à l'intérieur du bâti 12. L'arbre de rotation 34 est ainsi supporté par le bâti 12 par au moins un roulement 36 reliant le bâti 12 et l'arbre de rotation 34.

Le rotor 16 est monté mobile en rotation autour d'un axe de rotation X-X' par rapport au stator 18. Le stator 18 entoure le rotor 16 parallèlement à l'axe de rotation X-X' à l'intérieur du bâti 12 et est coaxial au rotor 16. De façon classique, le rotor 16 et le stator 18 permettent de transformer une énergie électrique en une énergie mécanique délivrée par l'arbre de rotation 34.

L'échangeur 20 comprend par exemple des parois externes 38, 40 définissant un espace d'échangeur 41 présentant une section rectangulaire dans un plan perpendiculaire à l'axe de rotation X-X' du rotor 16. Les parois externes 38, 40 de l'échangeur 20 forment en particulier un parallélépipède rectangle.

Par exemple, au moins une paroi 38 parmi les parois externes 38, 40 fait face au bâti 12, notamment à la paroi externe 32 du bâti 12. En particulier, les autres parois 40 de l'échangeur 20 sont situées vers l'extérieur du moteur 10.

L'échangeur 20 est adapté pour échanger une portion d'énergie thermique entre le fluide externe FE de refroidissement circulant dans un circuit primaire 42 de refroidissement et le fluide interne FI de refroidissement circulant dans un circuit secondaire 44 de refroidissement.

L'échangeur 20 comprend ainsi au moins une conduite primaire 46 et au moins une conduite secondaire 48 en contact thermique avec la ou chaque conduite primaire 46. La ou chaque conduite secondaire 48 est reliée au volume intérieur clos 14, de sorte à être en en communication fluidique avec ce volume intérieur clos 14, pour former le circuit secondaire 44 de refroidissement de circulation du fluide interne FI de refroidissement.

Chaque conduite primaire 46 et chaque conduite secondaire 48 s'étend en particulier à l'intérieur de l'espace d'échangeur 41, de préférence de part en part à travers de l'espace d'échangeur 41.

Chaque conduite primaire 46 forme en particulier une partie du circuit primaire 42 dans lequel le fluide externe FE de refroidissement circule. En particulier, l'échangeur 20 comprend N conduites primaires 46, N étant un nombre entier entre 1 et 1000. Comme visible dans l'exemple de la figure 1, l'échangeur 20 comprend par exemple trois conduites primaires 46.

Chaque conduite primaire 46 s'étend longitudinalement selon une direction parallèle à l'axe de rotation X-X' et présente des sections transversales circulaires ou rectangulaires. Par exemple, chaque conduite primaire 46 forme un tube cylindrique s'étendant longitudinalement sensiblement parallèlement à l'axe de rotation X-X'.

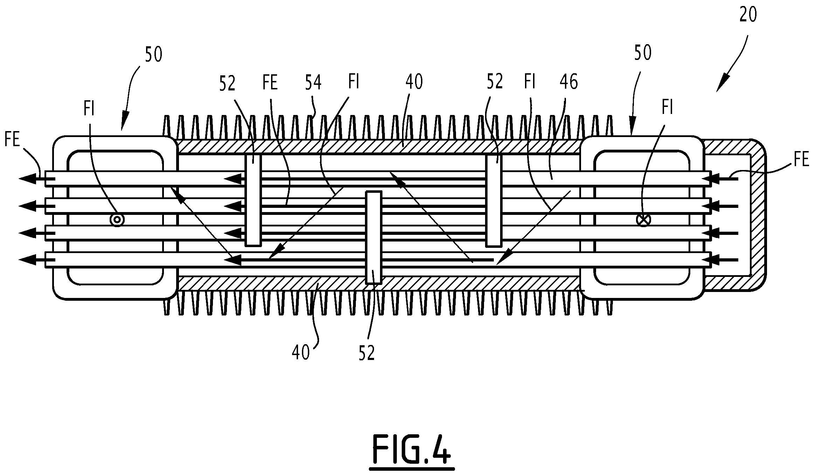

L'espace délimité entre les conduites primaires 46 et les parois externes 38, 40 de l'échangeur 20 forme la conduite secondaire 48. La conduite secondaire 48 est en particulier reliée, à chaque extrémité, à l'espace intérieur clos 14 du bâti 12 par deux piquages 50, plus particulièrement visibles sur les figures 3 et 4.

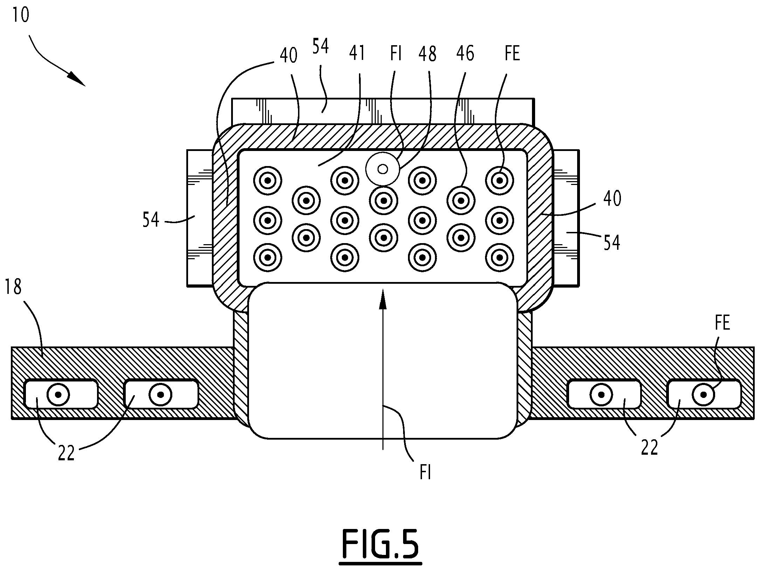

Comme visible en particulier sur les figures 1 et 5, selon un vue générale et sans montrer le dispositif de séparation de la mode de réalisation, le fluide externe FE de refroidissement circule dans la conduite primaire 46 dans le même sens que le fluide interne FI de refroidissement dans la conduite secondaire 48.

Selon une première variante, visible en particulier sur les figures 3 et 5, la conduite primaire 46 s'étend parallèlement à la conduite secondaire 48. Le fluide externe FE de refroidissement et le fluide interne FI de refroidissement circulent parallèlement l'un par rapport à l'autre, respectivement dans la conduite primaire 46 et la conduite secondaire 48.

Comme visible en particulier dans l'exemple de la figure 5, selon la première variante, le fluide externe FE de refroidissement et le fluide interne FI de refroidissement circulent dans le même sens.

Selon une deuxième variante, visible en particulier sur la figure 4, l'échangeur 20 comprend au moins une chicane 52, par exemple trois chicanes 52. Chaque chicane 52 est disposée dans la conduite secondaire 48, transversalement à une direction de circulation du fluide externe FE de refroidissement dans l'échangeur 20, en particulier perpendiculairement à chaque conduite primaire 46. Chaque conduite primaire 46 s'étend, selon cette deuxième variante, parallèlement à l'axe de rotation X-X'.

Les chicanes 52 sont ainsi configurées pour dévier le fluide interne FI dans la conduite secondaire 48. Ainsi, l'échange thermique entre le fluide externe FE et le fluide interne FI est augmenté, du fait que la surface d'échange entre le fluide externe FE et le fluide interne FI est augmentée.

L'échangeur 20, et en particulier au moins une paroi parmi les parois externes 38, 40 de l'échangeur 20, comporte des ailettes externes 54 de refroidissement. Comme visible en particulier dans les figures 1, 3, 4 et 5, les parois externes 38, 40 comprennent par exemple chacune une pluralité d'ailettes externes 54.

Les ailettes externes 54 s'étendent de préférence selon une direction perpendiculaire à l'axe de rotation X-X' du rotor 16. Les ailettes externes 54 sont orientées vers l'extérieur des parois externes 38, 40, en particulier à l'opposé de l'espace d'échangeur 41.

Les ailettes externes 54 permettent d'augmenter l'échange thermique entre l'échangeur 20 et l'air ambiant environnant l'échangeur 20, par exemple par une circulation d'air engendrée par l'avancement du train, lorsque le moteur 10 est monté sur un train. En effet, grâce aux ailettes externes 54, la surface de contact pour un échange thermique entre l'échangeur 20 et l'air ambiant est augmentée.

Chacune des parois externes 38, 40 comprend, par exemple, au moins trente ailettes externes 54. Sur chacune des parois externes 38, 40, les ailettes externes 54 sont disposées parallèlement entre elles. De préférence, les ailettes externes 54 sont espacées entre elles selon l'axe X-X' de rotation d'environ 1 centimètre. Les ailettes externes 54 sont, par exemple, réalisées en aluminium.

La ou chaque conduite de refroidissement de stator 22 traversant le stator 18 forme une partie du circuit primaire 42. De préférence, le moteur 10 comprend plusieurs conduites de refroidissement de stator 22, chacune s'étendant sensiblement parallèlement à l'axe de rotation X-X'.

Le dispositif de ventilation primaire 24 est en communication fluidique avec la ou chaque conduite de refroidissement de stator 22. Le dispositif de ventilation primaire 24 est ainsi configuré pour aspirer le fluide externe FE de refroidissement de l'extérieur du moteur 10 et pour forcer la circulation du fluide externe FE de refroidissement à travers la ou chaque conduite de refroidissement de stator 22.

Le dispositif de ventilation primaire 24 est fixé à l'arbre de rotation 34.

Le dispositif de ventilation primaire 24 est en particulier configuré pour faire varier un débit d'aspiration du fluide externe FE de refroidissement aspiré en fonction d'une fréquence de rotation de l'arbre de rotation 34.

De préférence, le dispositif de ventilation primaire 24 est configuré pour faire varier le débit d'aspiration indépendamment d'un sens de rotation du rotor 16. Par exemple, pour une fréquence de rotation donnée, le dispositif de ventilation primaire 24 est configuré pour aspirer un débit sensiblement égal selon chaque sens de rotation. Par exemple, le dispositif de ventilation primaire 24 comprend au moins une pale 56 de ventilation présentant une géométrie symétrique.

Le dispositif de séparation 26 est configuré pour séparer le fluide externe FE de refroidissement aspiré par le dispositif de ventilation primaire 24, en distribuant le fluide externe FE entre un premier flux F1, visible en particulier sur les figures 2 et 6, forcé à travers la ou chaque conduite de refroidissement de stator 22 et un deuxième flux F2, visible en particulier sur les figures 1 et 6, forcé à travers la ou chaque conduite primaire 46.

**Comme visible** en particulier sur la figure 6, le dispositif de séparation 26 comprend une plaque de séparation 58 s'étendant sensiblement parallèlement à une direction de circulation du fluide externe FE de refroidissement en amont du dispositif de séparation 26.

L'expression « en amont » est définie par rapport au sens de circulation du fluide correspondant, par exemple du fluide externe FE ou du fluide interne FI. De même, l'expression « en aval » est définie par rapport au sens de circulation du fluide concerné, par exemple du fluide externe FE ou du fluide interne FI. Par exemple, une position « en amont » d'un dispositif est une position traversée par le fluide concerné avant le passage dudit fluide par ce dispositif, et une position « en aval » du dispositif est une position traversée par le fluide concerné après le passage dudit fluide par ce dispositif.

La plaque de séparation 58 est en particulier ainsi agencée pour permettre de prédéfinir la répartition du débit entre le premier flux F1 et le deuxième flux F2, en particulier indépendamment d'un débit du fluide externe FE aspiré par le dispositif de ventilation primaire 24.

Par exemple, le dispositif de séparation 26 est positionné de manière à ce que le deuxième flux F2 présente un débit inférieur à 15%, de préférence inférieur à 10%, de la somme de débits du premier flux F1 et du deuxième flux F2.

Le fait que le dispositif de séparation 26 est positionné de manière à ce que le deuxième flux F2 présente un débit inférieur à 15% permet de réduire l'impact du prélèvement de fluide externe FE vers la conduite primaire 46 de l'échangeur 20, et donc la réduction du premier flux F1 destiné à traverser la conduite de refroidissement de stator 22. Ainsi, le refroidissement du stator 18 est assuré, car uniquement une petite fraction du fluide externe FE aspiré par le dispositif de ventilation primaire 24 est déviée à travers l'échangeur 20.

Le dispositif de ventilation secondaire 28 est configuré pour faire circuler le fluide interne FI dans le circuit secondaire 44 de refroidissement. En particulier, le dispositif de ventilation secondaire 28 est fixé à l'arbre de rotation 34. Le dispositif de ventilation secondaire 28 comprend par exemple des pales 60 configurées pour faire circuler le fluide interne FI de refroidissement dans le circuit secondaire 44, notamment indépendamment d'un sens de rotation de l'arbre de rotation 34.

Le dispositif de ventilation primaire 24 et le dispositif de ventilation secondaire 28 sont formés d'une seule pièce. Dans ce cas, comme visible en particulier sur les figures 1 et 2, le dispositif de ventilation primaire 24 et secondaire 28 forment par exemple une séparation entre le circuit primaire 42 et le circuit secondaire 44.

Le circuit primaire 42 est adapté pour refroidir le stator 18 et l'échangeur 20.

Comme visible en particulier sur les figures 1, 2 et 6, le circuit primaire 42 est formé par une zone d'entrée 62 en communication fluidique avec l'extérieur du moteur 10, et définie par un flasque d'entrée 64 (décrit ci-dessous) du moteur 10, la conduite de refroidissement de stator 22, une conduite d'amenée 66 (décrite ci-dessous), la ou les conduites primaires 46 de l'échangeur 20 et des sorties de refoulement 68 en communication fluidique avec l'extérieur du moteur 10, prolongeant respectivement la ou les conduites primaires 46 et la conduite de refroidissement de stator 22.

Comme visible en particulier sur les figures 1, 2 et 6, le moteur 10 comprend en outre le flasque d'entrée 64 présentant une ouverture 70 formant une entrée d'aspiration du fluide externe FE de refroidissement. Le flasque d'entrée 64 est par exemple connecté à l'arbre de rotation 34 par un roulement 65, au bâti 12 et/ou à l'échangeur 20.

Comme visible en particulier sur la figure 6, le moteur 10 comprend en outre la conduite d'amenée 66 reliant le dispositif de séparation 26 et la ou chaque conduite primaire 46 de l'échangeur 20. La conduite d'amenée 66 comprend une boucle formant une déviation d'une direction de circulation du fluide externe FE de refroidissement, en particulier du deuxième flux F2, strictement supérieure à 90 degrés.

Comme visible dans l'exemple de la figure 6, la conduite d'amenée 66 présente ainsi une première zone 72 s'étendant selon une direction formant un angle positif en sens horaire, par exemple un angle compris entre 5 et 60 degrés, par rapport à la direction de circulation du fluide externe FE aspiré en amont du dispositif de séparation 26. La conduite d'amenée 66 présente, en outre, une deuxième zone 74 s'étendant selon une direction sensiblement parallèle à la direction de circulation du fluide externe FE aspiré en amont du dispositif de séparation 26 et une troisième zone 76, débauchant dans la ou chaque conduite primaire 46, et s'étendant selon une direction formant un angle négatif en sens horaire, par exemple sensiblement égal à -90 degrés, par rapport à la direction de circulation du fluide externe FE aspiré en amont du dispositif de séparation 26. Selon cet exemple, la déviation de la direction de circulation du deuxième flux F2 entre la première zone 72 et la troisième zone 76 est ainsi supérieure ou égale à 95 degrés.

La conduite d'amenée 66 permet en particulier de dévier le deuxième flux F2 pour arriver dans l'échangeur 20 en minimisant la génération de turbulences dans le fluide externe FE du deuxième flux F2, notamment grâce à l'orientation des première à troisième zones 72, 74, 76 de la conduite d'amenée 66.

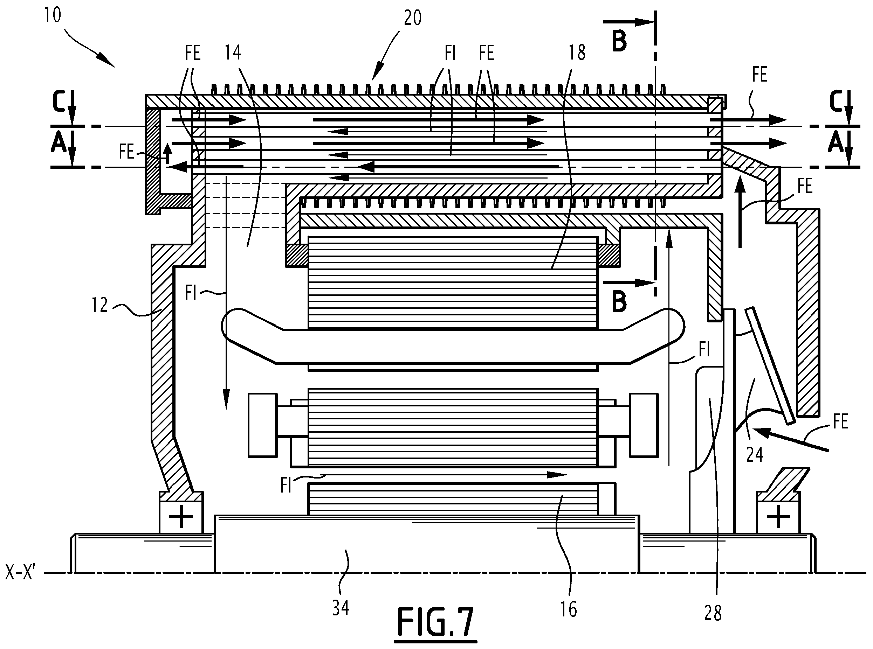

On a représenté sur les figures 7 à 10 un moteur 10 électrique selon une autre variante non revendiquée. Les éléments correspondants aux figures 1 à 6 sont désignés par les mêmes signes de référence. Dans ce qui suit, uniquement les différences par rapport à la mode de réalisation sont décrites. Les éléments identiques ou similaires ne sont pas décrits de nouveau. Pour des raisons de visibilité, certains éléments identiques à la mode de réalisation, et référencés sur les figures 1 à 6, ne sont pas référencés de nouveau sur les figures 7 à 10.

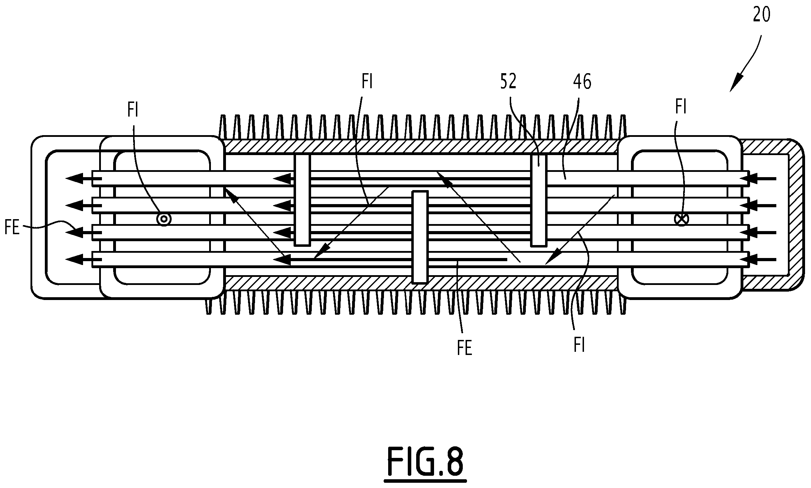

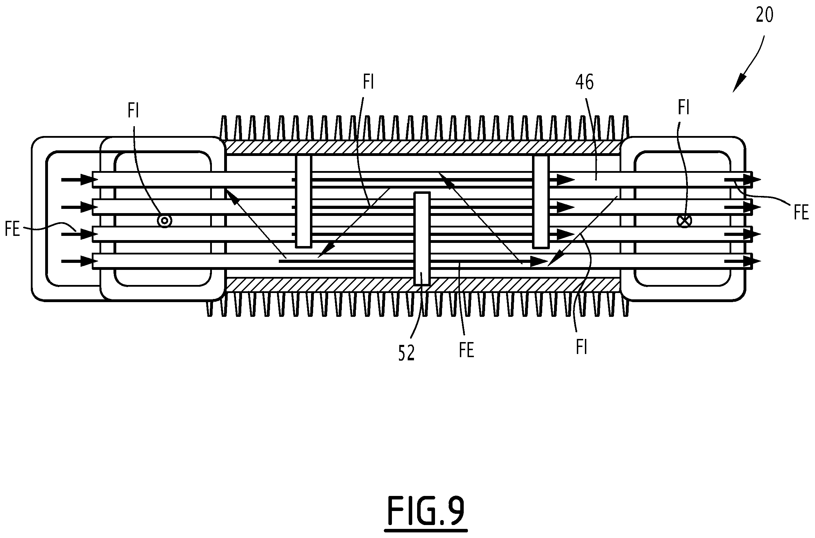

L'échangeur 20 comprend des conduites primaires 46 s'étendant parallèlement à l'axe de rotation X-X'. Les conduites primaires sont agencées de manière à permettre une circulation du fluide externe de refroidissement dans un premier sens, visible par exemple sur la figure 8, dans une première zone de l'échangeur 20, et dans un deuxième sens inverse au premier sens, et visible par exemple sur la figure 9, dans une deuxième zone de l'échangeur 20. En référence à la figure 7, la première zone comporte par exemple une conduite primaire 46 et la deuxième zone comporte par exemple deux conduites primaires 46.

En particulier, les conduites primaires 46 dans la deuxième zone sont agencées de manière à ce que le fluide externe FE circule en sens opposé par rapport au fluide interne FI dans l'échangeur 20. La circulation en sens opposé permet notamment d'augmenter l'échange thermique entre le fluide externe FE et le fluide interne FI, car la différence de température entre le fluide externe FE et le fluide interne FI est, à chaque point d'échange thermique le long de la ou les conduites primaires 46, très élevée lors de cette circulation en sens opposé.

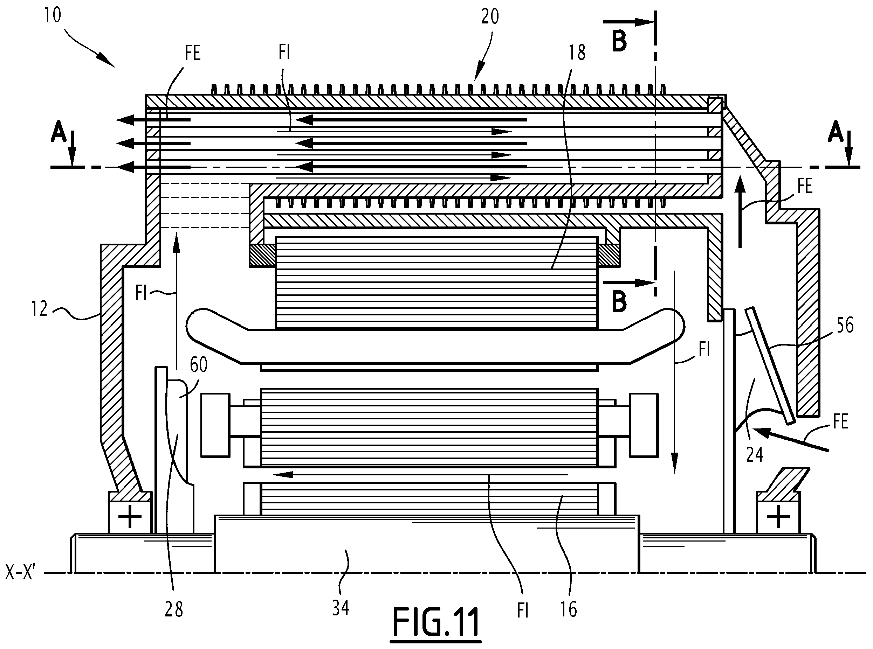

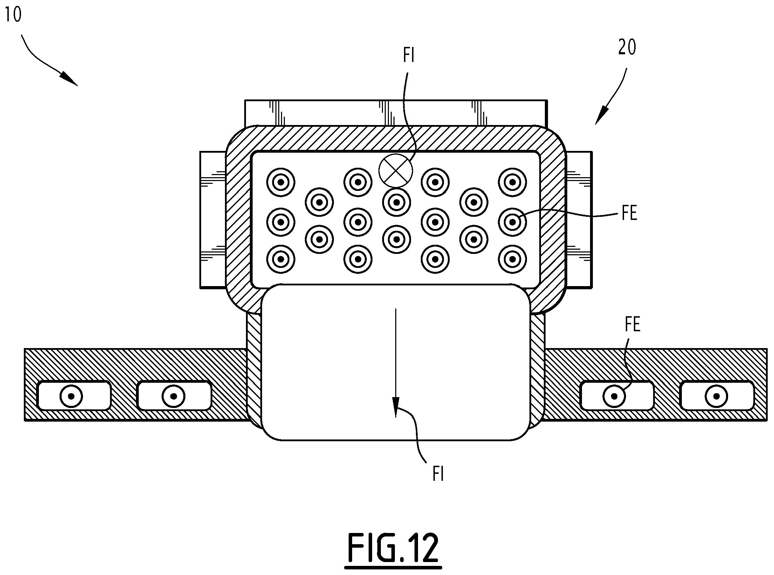

On a représenté sur les figures 11 et 12 un moteur 10 électrique selon une autre variante non revendiquée. Les éléments correspondants à la mode de réalisation sont désignés par les mêmes signes de référence. Dans ce qui suit, uniquement les différences par rapport à la mode de réalisation sont décrites. Les éléments identiques ou similaires ne sont pas décrits de nouveau. Pour des raisons de visibilité, certains éléments identiques à la mode de réalisation, et référencés sur les figures 1 à 6, ne sont pas référencés de nouveau sur les figures 11 et 12.

La dispositif de ventilation secondaire 28 est configuré pour faire circuler le fluide interne FI dans l'échangeur 20 selon une direction opposée au sens de circulation du fluide externe FE dans l'échangeur 20.

Le dispositif de ventilation primaire 24 est notamment axialement décalé par rapport au dispositif de ventilation secondaire 28. En particulier, le dispositif de ventilation primaire 24 est formé par une pièce distincte du dispositif de ventilation secondaire 28.

En variante, non représentée, le dispositif de ventilation secondaire 28 est formé par une pièce distincte du dispositif de ventilation primaire 24, et le dispositif de ventilation secondaire 28 est agencé de manière à être apte à faire circuler le fluide interne FI dans l'échangeur 20 selon la même direction que la direction de circulation du fluide externe FE dans l'échangeur 20.

La personne du métier comprendra que les caractéristiques d'une exemple puissent être combinable avec une des autre exemples.

On conçoit que le moteur 10 selon l'invention présente un grand nombre d'avantages.

En effet, le moteur 10 présente une efficacité plus grande de refroidissement et est particulièrement compact, en particulier grâce à l'augmentation de la surface d'échange entre le fluide extérieur FE d'une part et le fluide interne FI et le stator 18 d'autre part.

De plus, le fait que le dispositif de ventilation primaire 24 est fixé à l'arbre de rotation 34 permet de réduire davantage l'encombrement du moteur 10, et en même temps d'obtenir un refroidissement efficace.

En particulier, le dispositif de séparation 26 permet de réduire une turbulence induite dans le fluide externe FE lors de la séparation entre le premier flux F1 et le deuxième flux F2, grâce à la plaque de séparation 58 s'étendant sensiblement parallèlement à la direction de circulation du fluide externe FE de refroidissement en amont du dispositif de séparation 26.

## Revendications

1. Moteur électrique (10) comprenant :
- un bâti (12) définissant un volume intérieur clos (14) ;
- un rotor (16) et un stator (18) formant un circuit magnétique, et étant logés dans le volume intérieur clos (14), le rotor (16) étant monté solidaire en rotation sur un arbre de rotation (34) à l'intérieur du bâti (12) ;
- au moins une conduite de refroidissement de stator (22) traversant le stator (18) ;
- au moins un échangeur (20) extérieur au bâti (12), l'échangeur (20) comprenant au moins une conduite primaire (46), et au moins une conduite secondaire (48) en contact thermique avec la ou chaque conduite primaire (46), la ou chaque conduite secondaire (48) étant reliée en communication fluidique au volume intérieur clos (14) pour former un circuit secondaire (44) de refroidissement de circulation d'un fluide interne (FI) de refroidissement ;
- un dispositif de ventilation primaire (24) en communication fluidique avec la ou chaque conduite de refroidissement de stator (22), configuré pour aspirer un fluide externe (FE) de refroidissement de l'extérieur du moteur (10), et pour forcer la circulation du fluide externe (FE) de refroidissement à travers la ou chaque conduite de refroidissement de stator (22) ;
ledit dispositif de ventilation primaire (24) étnat fixé à äl'arbre de rotation (34),
le moteur électrique est **caractérisé en ce que**:
- un dispositif de séparation (26) du fluide externe de refroidissement aspiré par le dispositif de ventilation primaire, ledit dispositif de séparation (26) distribuant le fluide externe (FE) entre un premier flux (F1) forcé à travers la ou chaque conduite de refroidissement de stator (22) et un deuxième flux (F2) forcé à travers la ou chaque conduite primaire (46),
- le dispositif de séparation (26) comprenant une plaque de séparation (58) s'étendant sensiblement parallèlement à une direction de circulation du fluide externe (FE) de refroidissement, ladite direction étant définie à une position traversée par ledit fluide externe qui est en amont du dispositif de séparation (26),
- le moteur comprenant en outre au moins une conduite d'amenée (66) reliant le dispositif de séparation (26) et la ou chaque conduite primaire (46) de l'échangeur (20), la conduite d'amenée (66) comprenant une boucle formant une déviation de ladite direction de circulation du fluide externe (FE) de refroidissement strictement supérieure à 90 degrés, et - la conduite d'amenée (66) présentant :
- une première zone (72) s'étendant selon une direction formant un angle positif en sens horaire par rapport à ladite direction de circulation du fluide externe (FE),
- une deuxième zone (74) s'étendant selon une direction (30) sensiblement parallèle à ladite direction de circulation du fluide externe (FE), et
- une troisième zone (76), débouchant dans la ou chaque conduite primaire (46), et s'étendant selon une direction formant un angle négatif en sens horaire par rapport à ladite direction de circulation du fluide externe (FE).

2. Moteur (10) selon la revendication 1, dans lequel le deuxième flux (F2) présente un débit inférieur à 15%, de préférence inférieur à 10%, de la somme de débits du premier flux (F1) et du deuxième flux (F2).

3. Moteur (10) selon la revendication 1 ou 2, dans lequel le dispositif de ventilation primaire (24) est configuré pour faire varier un débit d'aspiration du fluide externe (FE) de refroidissement aspiré en fonction d'une fréquence de rotation de l'arbre de rotation (34), de préférence indépendamment d'un sens de rotation du rotor (16).

4. Moteur (10) selon l'une quelconque des revendications précédentes, comprenant un dispositif de ventilation secondaire (28) fixé à l'arbre de rotation (34) et configuré pour faire circuler le fluide interne (FI) dans le circuit secondaire (44) de refroidissement.

5. Moteur (10) selon la revendication 4, dans lequel le dispositif de ventilation secondaire (28) est configuré pour faire circuler le fluide interne (FI) dans l'échangeur (20) selon une direction opposée au sens de circulation du fluide externe (FE) dans l'échangeur (20).

6. Moteur (10) selon la revendication 4, dans lequel le dispositif de ventilation primaire (24) et le dispositif de ventilation secondaire (28) sont formés d'une seule pièce.

7. Moteur (10) selon l'une quelconque des revendications précédentes, dans lequel l'échangeur (20) comprend des parois externes (38, 40) définissant un espace d'échangeur (41) présentant une section rectangulaire dans un plan perpendiculaire à un axe de rotation (X-X') du rotor (16), la ou chaque conduite primaire (46) et la ou chaque conduite secondaire (48) s'étendant à l'intérieur de l'espace d'échangeur (41), au moins une paroi (38) parmi les parois externes (38, 40) faisant face au bâti (12).

8. Moteur (10) selon la revendication 7, dans lequel au moins une paroi parmi les parois externes (38, 40) comporte des ailettes externes (54) de refroidissement, les ailettes externes (54) s'étendant de préférence selon une direction perpendiculaire à l'axe de rotation (X-X') du rotor (16).

9. Moteur (10) selon l'une quelconque des revendications précédentes, dans lequel l'échangeur (20) comprend au moins une chicane (52) disposée dans la conduite secondaire (48), transversalement à une direction de circulation du fluide externe (FE) de refroidissement dans l'échangeur (20).

## Patentansprüche

1. Elektromotor (10), umfassend:
- ein Gestell (12), welches ein geschlossenes Innenvolumen (14) definiert;
- einen Rotor (16) und einen Stator (18), welche einen magnetischen Kreis bilden und in dem geschlossenen Innenvolumen (14) aufgenommen sind, wobei der Rotor (16) rotationsfest an einer Rotationswelle (34) im Inneren des Gestells (12) montiert ist;
- wenigstens eine Stator-Kühlleitung (22), welche den Stator (18) durchläuft;
- wenigstens einen Wärmetauscher (20) außerhalb des Gestells (12), wobei der Wärmetauscher (20) wenigstens eine Primärleitung (46) und wenigstens eine Sekundärleitung (48) in thermischem Kontakt mit der oder jeder Primärleitung (46) umfasst, wobei die oder jede Sekundärleitung (48) in Fluidkommunikation mit dem geschlossenen Innenvolumen (14) verbunden ist, um einen Sekundär-Kühlkreislauf (44) zur Zirkulation eines internen Kühlfluids (FI) zu bilden;
- eine Primär-Ventilationsvorrichtung (24) in Fluidkommunikation mit der oder jeder Stator-Kühlleitung (22), welche dazu eingerichtet ist, ein externes Kühlfluid (FE) von der Außenseite des Motors (10) anzusaugen und die Zirkulation des externen Kühlfluids (FE) durch die oder jede Stator-Kühlleitung (22) hindurch zu erzwingen;
- wobei die Primär-Ventilationsvorrichtung (24) an der Rotationswelle (34) befestigt ist,
wobei der Elektromotor **gekennzeichnet ist durch**:
- eine Trennvorrichtung (26) für das externe Kühlfluid, welches von der Primär-Ventilationsvorrichtung angesaugt wird, wobei die Trennvorrichtung (26) das externe Fluid (FE) zwischen einem ersten Strom (F1), welcher **durch** die oder jede Stator-Kühlleitung (22) gezwungen wird, und einem zweiten Strom (F2) verteilt, welcher **durch** die oder jede Primärleitung (46) gezwungen wird,
wobei die Trennvorrichtung (26) eine Trennplatte (58) umfasst, welche sich im Wesentlichen parallel zu einer Zirkulationsrichtung des externen Kühlfluids (FE) erstreckt, wobei die Richtung bei einer Position definiert ist, welche von dem externen Fluid durchlaufen wird, welche stromaufwärts der Trennvorrichtung (26) ist,
wobei der Motor ferner wenigstens eine Zuführleitung (66) umfasst, welche die Trennvorrichtung (26) und die oder jede Primärleitung (46) des Wärmetauschers (20) verbindet, wobei die Zuführleitung (66) eine Schleife umfasst, welche eine Abweichung von der Zirkulationsrichtung des externen Kühlfluids (FE) bildet, welche streng größer als 90 Grad ist, und
wobei die Zuführleitung (66) aufweist:
- eine erste Zone (72), welche sich gemäß einer Richtung erstreckt, welche einen positiven Winkel im Uhrzeigersinn bezüglich der Zirkulationsrichtung des externen Fluids (FE) bildet;
- eine zweite Zone (74), welche sich gemäß einer Richtung (30) erstreckt, welche im Wesentlichen parallel zu der Zirkulationsrichtung des externen Fluids (FE) ist, und
- eine dritte Zone (76), welche in die oder jede Primärleitung (46) mündet und sich gemäß einer Richtung erstreckt, welche einen negativen Winkel im Uhrzeigersinn bezüglich der Zirkulationsrichtung des externen Fluids (FE) bildet.

2. Motor (10) nach Anspruch 1, wobei der zweite Strom (F2) einen Durchflussrate von weniger als 15%, vorzugsweise weniger als 10%, der Summe der Durchflussraten des ersten Stroms (F1) und des zweiten Stroms (F2) ausmacht.

3. Motor (10) nach Anspruch 1 oder 2, wobei die Primär-Ventilationsvorrichtung (24) dazu eingerichtet ist, einen Ansaugdurchsatz des externen Kühlfluids (FE) zu variieren, welches in Funktion einer Rotationsfrequenz der Rotationswelle (34) angesaugt wird, vorzugsweise unabhängig von einem Rotationssinn des Rotors (16).

4. Motor (10) nach einem der vorhergehenden Ansprüche, umfassend eine Sekundär-Ventilationsvorrichtung (28), welche an der Rotationswelle (34) befestigt und dazu eingerichtet ist, das interne Fluid (FI) in dem Sekundär-Kühlkreislauf (44) zum Zirkulieren zu bringen.

5. Motor (10) nach Anspruch 4, wobei die Sekundär-Ventilationsvorrichtung (28) dazu eingerichtet ist, das interne Fluid (FI) in dem Wärmetauscher (20) gemäß einer Richtung zum Zirkulieren zu bringen, welche entgegengesetzt zu dem Zirkulationssinn des externen Fluids (FE) in dem Wärmetauscher (20) ist.

6. Motor (10) nach Anspruch 4, wobei die Primär-Ventilationsvorrichtung (24) und die Sekundär-Ventilationsvorrichtung (28) aus einem einzelnen Stück gebildet sind.

7. Motor (10) nach einem der vorhergehenden Ansprüche, wobei der Wärmetauscher (20) externe Wände (38, 40) umfasst, welche einen Wärmetauscher-Raum (41) definieren, welcher einen rechteckigen Querschnitt in einer Ebene senkrecht zu einer Rotationsachse (X-X') des Rotors (16) aufweist, wobei sich die oder jede Primärleitung (46) und die oder jede Sekundärleitung (48) im Inneren des Wärmetauscher-Raums (41) erstreckt, wobei wenigstens eine Wand (38) unter den externen Wänden (38, 40) dem Gestell (12) zugewandt ist.

8. Motor (10) nach Anspruch 7, wobei wenigstens eine Wand unter den externen Wänden (38, 40) externe Kühlrippen (54) umfasst, wobei sich die externen Kühlrippen (54) vorzugsweise gemäß einer Richtung senkrecht zu der Rotationsachse (X-X') des Rotors (16) erstrecken.

9. Motor (10) nach einem der vorhergehenden Ansprüche, wobei der Wärmetauscher (20) wenigstens eine Ablenkblende (52) umfasst, welche in der Sekundärleitung (48) transversal zu einer Zirkulationsrichtung des externen Kühlfluids (FE) in dem Wärmetauscher (20) angeordnet ist.

## Claims

1. Electric motor (10) comprising:
- a frame (12) defining a closed inner volume (14);
- a rotor (16) and a stator (18) forming a magnetic circuit, and being housed in the enclosed inner volume (14), the rotor (16) being rotationally fixed to a rotating shaft (34) inside the frame (12);
- at least one stator cooling line (22) passing through the stator (18);
- at least one exchanger (20) external to the frame (12), the exchanger (20) comprising at least one primary line (46), and at least one secondary line (48) in thermal contact with the or each primary line (46), the or each secondary line (48) being connected in fluid communication to the enclosed inner volume (14) to form a secondary cooling circuit (44) for circulation of a cooling internal fluid (FI);
- a primary ventilation device (24) in fluid communication with the or each stator cooling line (22), configured to draw in an external cooling fluid (FE) from outside the motor (10), and to force the external cooling fluid (FE) to flow through the or each stator cooling line (22);
said primary ventilation device (24) being attached to the rotating shaft (34), the electric motor is **characterised in that**:
- a device (26) for separating the external cooling fluid drawn in by the primary ventilation device, said separation device (26) distributing the external fluid (FE) between a first flow (F1) forced through the or each stator cooling line (22) and a second flow (F2) forced through the or each primary line (46),
- the separation device (26) comprising a separation plate (58) extending substantially parallel to a flow direction of the external cooling fluid (FE), said direction being defined at a position traversed by said external fluid which is upstream of the separation device (26),
- the motor further comprising at least one supply line (66) connecting the separation device (26) and the or each primary line (46) of the exchanger (20), the supply line (66) comprising a loop that causes a deflection of said flow direction of the external cooling fluid (FE) by an angle strictly greater than 90 degrees, and
- the supply line (66) having:
- a first area (72) extending according to a direction forming a positive clockwise angle with respect to said flow direction of the external fluid (FE),
- a second area (74) extending according to a direction (30) substantially parallel to said flow direction of the external fluid (FE), and
- a third area (76), opening into the or each primary line (46), and extending according to a direction forming a negative clockwise angle with respect to said flow direction of the external fluid (FE).

2. Motor (10) according to Claim 1, wherein the second flow (F2) has a flow rate of less than 15%, preferably less than 10%, of the sum of flow rates of the first flow (F1) and the second flow (F2).

3. Motor (10) according to Claim 1 or 2, wherein the primary ventilation device (24) is configured to vary a suction flow rate of the drawn in external cooling fluid (FE) according to a rotational frequency of the rotating shaft (34), preferably independently of a rotational direction of the rotor (16).

4. Motor (10) according to any one of the preceding claims, comprising a secondary ventilation device (28) attached to the rotating shaft (34) and configured to circulate the internal fluid (FI) in the secondary cooling circuit (44).

5. Motor (10) according to Claim 4, wherein the secondary ventilation device (28) is configured to circulate the internal fluid (FI) in the exchanger (20) according to a direction opposite to the flow direction of the external fluid (FE) in the exchanger (20).

6. Motor (10) according to Claim 4, wherein the primary ventilation device (24) and the secondary ventilation device (28) are made in one piece.

7. Motor (10) according to any one of the preceding claims, wherein the exchanger (20) comprises outer walls (38, 40) defining an exchanger space (41) having a rectangular cross-section in a plane perpendicular to an axis of rotation (X-X') of the rotor (16), the or each primary line (46) and the or each secondary line (48) extending inside the exchanger space (41), at least one wall (38) among the outer walls (38, 40) facing the frame (12).

8. Motor (10) according to Claim 7, wherein at least one wall among the outer walls (38, 40) comprises outer cooling fins (54), the outer fins (54) preferably extending according to a direction perpendicular to the axis of rotation (X-X') of the rotor (16).

9. Motor (10) according to any one of the preceding claims, wherein the exchanger (20) comprises at least one baffle (52) disposed in the secondary line (48), transversely to a flow direction of the external cooling fluid (FE) in the exchanger (20).
